# FASCICULE DE BREVET EUROPEEN

(11) **EP 2 069 625 B1**
(45) Date de publication et mention de la délivrance du brevet: **09.01.2019**
(21) Numéro de dépôt: 07823777.3
(22) Date de dépôt: 06.09.2007
(51) Int. Cl.: F02C 7/20, F02C 7/24, F02K 3/04

(54) **DISPOSITIF PERMETTANT D'AMÉLIORER L'EFFICACITÉ DES TRAITEMENTS ACOUSTIQUES DANS UN CONDUIT D'UNE MOTORISATION D'AÉRONEF**
VORRICHTUNG FÜR ERHÖHTE WIRKSAMKEIT VON SCHALLBEHANDLUNGEN IN EINEM FLUGZEUGANTRIEBSKANAL
DEVICE FOR IMPROVING THE EFFECTIVENESS OF ACOUSTIC TREATMENTS IN AN AIRCRAFT DRIVE DUCT

(30) Priorité: 07.09.2006 FR 0653606
(43) Date de publication de la demande: 17.06.2009
(73) Titulaire: Airbus Opérations SAS, 31060 Toulouse (FR)
(72) Inventeur: GANTIE, Fabrice, F-31000 Toulouse (FR); DRUON, Yann, F-31300 Toulouse (FR)
(74) Mandataire: Fantin, Laurent
(86) Numéro de dépôt international: PCT/FR2007/051880
(87) Numéro de publication internationale: WO 2008/029062

(56) Documents cités:
- WO-A-95/18042
- GB-A- 1 284 341
- US-A- 3 692 141
- US-A- 3 890 060
- US-A- 5 224 341

## Description

La présente invention se rapporte à un dispositif permettant d'améliorer l'efficacité des traitements acoustiques dans un conduit d'une motorisation d'aéronef.

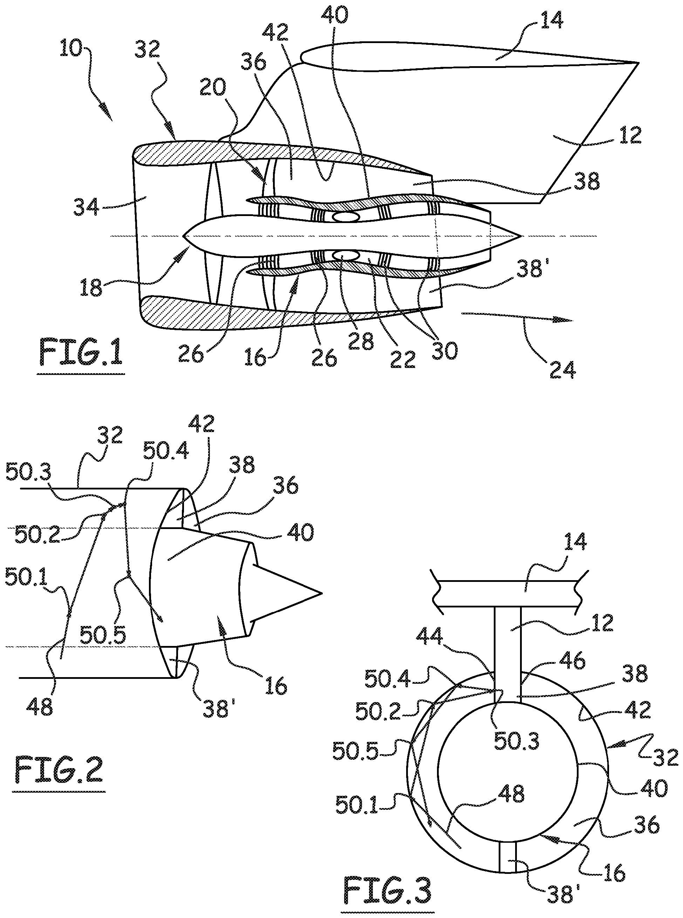

Sur la figure 1, on a représenté en 10 un ensemble propulsif d'aéronef, également appelé turboréacteur, relié grâce à des moyens de liaison à un aéronef, notamment grâce à un mât 12 sous la voilure 14. Il comprend un moteur 16 avec d'une part une soufflante comportant un rotor 18 muni de pales et un stator 20 muni d'aubes, et d'autre part, un conduit primaire 22 dans lequel sont disposés selon le sens d'écoulement de l'air 24, des étages de compresseurs 26, une chambre de combustion 28 et des étages de turbines 30. Le moteur 16 est disposé dans une nacelle 32 qui comprend en amont de la soufflante une entrée d'air 34 et en aval du stator de la soufflante un conduit secondaire 36.

Au moins une entretoise 38 appelée également bifurcation relie généralement le moteur et la nacelle, s'étendant entre la paroi interne 40 et la paroi externe 42 du conduit secondaire, ladite entretoise formant une cloison dans le conduit secondaire 36 disposée selon la direction d'écoulement de l'air 24 et une direction radiale.

Selon un mode de réalisation, la motorisation comprend deux entretoises radiales 38 et 38', disposées dans un plan vertical, dans des positions angulaires respectivement supérieure à 12h et inférieure à 6h, lesdites entretoises formant deux bifurcations, scindant le conduit secondaire 36 en deux conduits parallèles en forme de C selon une coupe transversale du moteur. Généralement, la bifurcation 38 supérieure se prolonge dans le mât 12, dans le cas d'une motorisation sous voilure, pour renforcer la liaison entre le moteur et le reste de l'aéronef.

Chaque bifurcation comprend une première surface dite surface gauche 44 et une seconde surface dite surface droite 46.

Selon l'art antérieur, ces bifurcations 38 offrent des surfaces 44 et 46 approximativement planes et sont dimensionnées en fonction de contraintes mécaniques et aérodynamiques afin de ne pas nuire aux performances de l'ensemble propulsif.

Le bruit émis par l'ensemble propulsif 10 se compose d'une part du bruit de jet, produit à l'extérieur des conduits suite au mélange des différents écoulements d'air et gaz brûlés, et d'autre part, du bruit généré par les parties internes, dit bruit interne, produit par la soufflante, les compresseurs, les turbines et la combustion qui se propage à l'intérieur des conduits.

Quel que soit le bruit émis à la source, le champ acoustique se structure dans le conduit sous la forme d'une combinaison de « sons élémentaires » appelés modes, chaque mode se propageant le long du conduit selon des directions privilégiées. La quasi-totalité des modes se propagent en tournant dans le conduit, en se réfléchissant sur les parois interne et externe du conduit considéré et sur les parois des bifurcations. A titre d'exemple, on a représenté sur les figures 2 et 3, un rayon acoustique 48 associé à un mode donné qui se propage dans le conduit secondaire 36 avec deux réflexions 50.1 et 50.2 sur les parois interne 40 et externe 42, une réflexion 50.3 sur la surface gauche 44 de la bifurcation supérieure suivie de deux réflexions 50.4 et 50.5 sur les parois interne 40 et externe 42 avant de sortir du conduit.

Pour limiter l'impact des nuisances sonores à proximité des aéroports, les normes internationales sont de plus en plus contraignantes en matière d'émissions sonores.

Des techniques ont été développées pour réduire le bruit interne, notamment en disposant, au niveau des parois des conduits et des bifurcations, des revêtements visant à absorber une partie de l'énergie sonore, notamment en utilisant le principe des résonateurs d'Helmholtz.

Cependant, le bruit interne constitué principalement du bruit de la soufflante dont une large part se propage dans le conduit secondaire et rayonne en sortie de conduit, demeure une source prépondérante de bruit, malgré l'utilisation des revêtements acoustiques notamment en raison d'un nombre de réflexions limité des rayons acoustiques sur lesdits revêtements.

Aussi, la présente invention vise à pallier les inconvénients de l'art antérieur en proposant un dispositif permettant d'améliorer l'efficacité des traitements acoustiques dans un conduit d'une motorisation d'aéronef.

A cet effet, l'invention a pour objet un dispositif pour améliorer l'efficacité du ou des traitement(s) acoustique(s) dans un ensemble propulsif d'aéronef selon la revendication 1.

Cet agencement permet d'améliorer l'efficacité du traitement acoustique et d'obtenir une meilleure atténuation du son le long du conduit.

D'autres caractéristiques et avantages ressortiront de la description qui va suivre de l'invention, description donnée à titre d'exemple uniquement, en regard des dessins annexés sur lesquels :
- la figure 1 est une coupe longitudinale selon un plan vertical d'un ensemble propulsif,
- la figure 2 est une vue en perspective de l'arrière d'un ensemble propulsif illustrant la trajectoire d'un rayon acoustique avec des bifurcations selon l'art antérieur,
- la figure 3 est une vue de l'arrière d'un ensemble propulsif illustrant la trajectoire d'un rayon acoustique avec des bifurcations selon l'art antérieur,
- la figure 4 est une vue en perspective de l'arrière d'un ensemble propulsif illustrant la trajectoire d'un rayon acoustique avec des bifurcations selon l'invention,
- la figure 5 est une vue de l'arrière d'un ensemble propulsif illustrant la trajectoire d'un rayon acoustique avec des bifurcations selon l'invention,
- la figure 6A est une vue de l'arrière illustrant une bifurcation selon une variante de l'invention, et
- la figure 6B est une vue de l'arrière illustrant une bifurcation selon une autre variante de l'invention.

Sur la figure 1, on a représenté en 10 un ensemble propulsif d'aéronef, également appelé turboréacteur, relié grâce à des moyens de liaison à un aéronef, notamment grâce à un mât 12 sous la voilure 14 de l'aéronef.

Cependant l'invention n'est pas limitée à cette implantation, l'ensemble propulsif pouvant être relié à une autre partie de l'aéronef par le biais de moyens de liaison différents.

Selon un mode de réalisation, l'ensemble propulsif 10 comprend d'une part, un moteur 16 avec d'une part une soufflante comportant un rotor 18 muni de pales et un stator 20 muni d'aubes, et d'autre part, un conduit primaire 22 dans lequel sont disposés selon le sens de l'écoulement de l'air 24, plus généralement appelé flux gazeux, des étages de compresseurs 26, une chambre de combustion 28 et des étages de turbines 30. Le moteur 16 est disposé dans une nacelle 32 qui comprend une entrée d'air 34 en amont de la soufflante et un conduit secondaire 36 en aval du stator 20 de la soufflante.

Au moins une entretoise 38 appelée également bifurcation est prévue pour relier le moteur et la nacelle, s'étendant entre la paroi interne 40 et la paroi externe 42 du second conduit, ladite entretoise formant une cloison dans le conduit secondaire 36 disposée selon la direction d'écoulement de l'air 24 et une direction radiale.

Selon un mode de réalisation, la motorisation comprend deux entretoises radiales 38 et 38' disposées dans un plan vertical, dans des positions angulaires respectivement supérieure à 12h et inférieure à 6h, lesdites entretoises formant deux bifurcations, scindant le conduit secondaire 36 en deux conduits parallèles en forme de C selon une coupe transversale du moteur. Généralement, la bifurcation 38 supérieure se prolonge dans le mât 12, dans le cas d'une motorisation sous voilure, pour renforcer la liaison entre le moteur et le reste de l'aéronef.

Chaque bifurcation comprend une première surface dite surface gauche 44 et une seconde surface dite surface droite 46.

La disposition des bifurcations 38 peut être différente. Ainsi, l'ensemble propulsif peut comprendre trois bifurcations disposées à 120° ou tout autre répartition de bifurcations.

L'interaction de l'écoulement d'air avec la soufflante produit un bruit appelé bruit de soufflante qui se propage ensuite dans le conduit d'éjection secondaire, mais également dans l'entrée d'air, et qui rayonne ensuite dans toutes les directions en sortie dudit conduit. La présente invention vise à améliorer le traitement du bruit de soufflante. Néanmoins, elle pourrait s'appliquer aux autres bruits, tels que par exemple le bruit découlant de la combustion ou celui découlant de l'interaction de l'écoulement avec les étages de turbines ou de compresseurs.

Quel que soit le bruit émis à la source, le champ acoustique se structure dans le conduit sous la forme d'une combinaison de « sons élémentaires » appelés modes, chaque mode se propageant le long du conduit selon des directions privilégiées. La quasi-totalité des modes se propagent en tournant dans le conduit, en décrivant des trajectoires approximativement hélicoïdales, en se réfléchissant sur les parois interne et externe du conduit considéré et sur les parois des bifurcations.

L'invention vise plus particulièrement à réduire la perception au sol du bruit du moteur, dont notamment le bruit de soufflante émis par un ensemble propulsif comportant au moins un conduit d'éjection. Les bruits de combustion et de turbine peuvent être également visés si au moins une entretoise est insérée dans le conduit correspondant.

Généralement la paroi interne 40 et/ou la paroi externe 42 sont recouvertes au moins en partie par un revêtement visant à absorber une partie de l'énergie sonore, notamment en utilisant le principe des résonateurs d'Helmholtz. Ce revêtement n'est pas plus détaillé car il est connu de l'homme du métier.

Selon l'invention, au moins une paroi d'au moins une bifurcation 38 a un profil permettant d'augmenter le nombre de réflexions sur au moins une des parois interne 40 ou externe 42 du conduit secondaire 36 et/ou sur au moins une des parois même de la bifurcation si celle-ci est traitée, notamment si elle comprend un revêtement visant à absorber une partie de l'énergie sonore, afin d'améliorer l'efficacité du ou des traitement(s) acoustique(s).

Généralement, pour une même bifurcation, les parois gauche et droite sont sensiblement symétriques. Néanmoins les parois gauche et droite peuvent avoir un profil différent, et/ou avoir un profil évolutif sur la longueur de la bifurcation selon la direction de l'écoulement 24.

Selon les variantes, au moins l'une des parois d'au moins une bifurcation, notamment celle sur laquelle se réfléchit au moins une onde sonore, comprend un revêtement visant à absorber une partie de l'énergie sonore à la manière des parois interne et externe du conduit secondaire. Toutefois, les parois des bifurcations peuvent ne comprendre aucun revêtement visant à absorber une partie de l'énergie sonore.

Pour simplifier la description, pour la suite, les parois gauche et droite des bifurcations sont sensiblement symétriques.

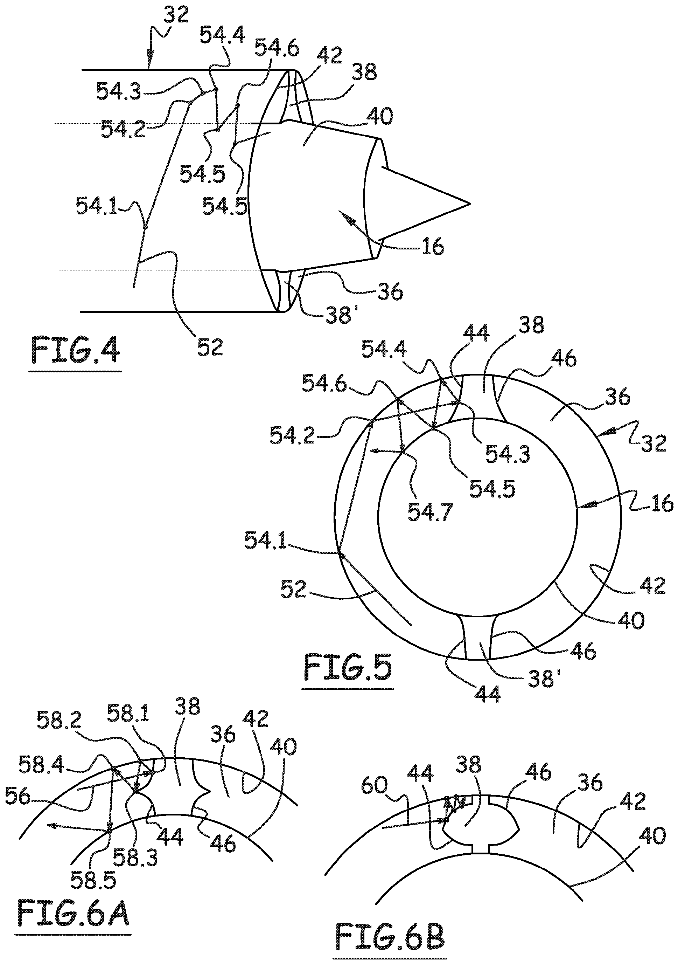

Selon une première variante illustrée sur les figures 4, 5 et 6A, le profil des parois est défini de manière à augmenter le nombre de réflexions sur la ou les paroi(s) 40 et/ou 42 du conduit secondaire 36, notamment au niveau des zones comprenant un revêtement acoustique, après au moins une réflexion sur ladite bifurcation. Dans la mesure où l'efficacité du traitement acoustique augmente avec le nombre de réflexions, le dispositif de l'invention permet d'améliorer l'efficacité du traitement acoustique et d'obtenir une meilleure atténuation du son le long du conduit.

De préférence, selon cette configuration, le profil des parois est concave, ou comprend au moins une partie courbe concave.

A titre d'exemple sur les figures 4 et 5, on a représenté un rayon acoustique 52 associé à un mode donné qui se propage dans le conduit secondaire 36 avec deux réflexions 54.1 et 54.2 sur les parois interne 40 et externe 42, une réflexion 54.3 sur la surface gauche 44 de la bifurcation supérieure suivie de multiples réflexions 54.4, 54.5, 54.6 et 54.7 sur les parois interne 40 et externe 42 avant de sortir du conduit.

Sur la figure 6A, on a représenté une autre configuration dans laquelle un rayon acoustique 56 se réfléchit deux fois sur la bifurcation 38. Ainsi, le rayon acoustique 56 se propage dans le conduit secondaire 36 avec une première réflexion 58.1 sur la bifurcation, suivie d'une réflexion 58.2 sur l'une des parois du conduit secondaire 36 et d'une seconde réflexion 58.3 sur la bifurcation, puis de multiples réflexions 58.4, 58.5 sur les parois interne 40 et externe 42 avant de sortir du conduit.

Selon une autre variante illustrée sur la figure 6B, le profil des parois est définie de manière à piéger l'énergie acoustique par de multiples réflexions entre la bifurcation et l'une des parois interne ou externe du conduit secondaire. Cette configuration est d'autant plus efficace que la paroi du conduit secondaire et/ou de la bifurcation comprend au droit des zones de réflexion un revêtement visant à absorber une partie de l'énergie sonore.

De préférence, selon cette configuration, le profil des parois est convexe, ou comprend au moins une partie courbe convexe.

A titre d'exemple sur la figure 6B, on a représenté un rayon acoustique 60 associé à un mode donné qui se propage dans le conduit secondaire 36 avec des réflexions alternées sur la bifurcation et sur l'une des parois du conduit secondaire.

Le profil de la bifurcation pourrait comprendre au moins une partie concave et/ou au moins une partie convexe.

Dans tous les cas, l'invention est très peu pénalisante, voire non pénalisante en terme de masse, contrairement aux dispositifs de l'art antérieur qui induisent une augmentation de la masse de l'aéronef, dans la mesure où on utilise un élément déjà existant.

Selon une alternative, on pourrait ajouter des cloisons s'étendant dans des plans radiaux ou non, au moins en partie sur la longueur du conduit secondaire permettant d'augmenter les réflexions sur au moins l'une des parois dudit conduit afin d'obtenir une meilleure atténuation du bruit sans que lesdites cloisons assurent une fonction structurelle à la manière des bifurcations 38.

En variante, l'invention peut être appliquée dans le conduit primaire.

Enfin, dans la mesure où la géométrie de la bifurcation la plus adaptée est dépendante de la direction de propagation du champ acoustique dans le conduit et donc des modes composant ce champ, la géométrie de la bifurcation pourra être définie pour traiter certains modes en particulier, les plus dominants, notamment ceux constitutifs du bruit dit de raie, à la fréquence de passage des parties tournantes et à ses harmoniques.

## Revendications

1. Nacelle d'aéronef comprenant un conduit (22, 36) dans lequel s'écoule un flux gazeux, ledit conduit (22, 36) étant délimité par deux parois interne (40) et externe (42) sensiblement concentriques, recouvertes au moins en partie par un revêtement visant à absorber une partie de l'énergie sonore, ladite nacelle comprenant au moins une cloison (38, 38') s'étendant sur au moins une partie de la longueur du conduit (22, 36) entre lesdites parois interne et externe (40, 42), ou une bifurcation (38, 38') s'étendant dans un plan radial sur au moins une partie de la longueur dudit conduit (36), qui comprend deux parois (44,46), **caractérisée en ce qu'**au moins l'une des deux parois (44, 46) de la cloison ou de la bifurcation (38, 38') comprend un profil dans un plan transversal de la nacelle qui comporte au moins une partie convexe et au moins une partie concave.

2. Nacelle d'aéronef selon la revendication 1, **caractérisée en ce qu'**au moins l'une des deux parois (44, 46) de la cloison ou de la bifurcation (38, 38') comprend un revêtement acoustique visant à absorber une partie de l'énergie sonore.

3. Nacelle d'aéronef selon l'une des revendications précédentes, **caractérisée en ce que** les deux parois de la cloison ou de la bifurcation (38, 38') sont symétriques.

4. Nacelle d'aéronef selon la revendication précédente, **caractérisée en ce que** les deux parois de la bifurcation (38) sont configurées de manière à ce qu'un rayon acoustique (56) se propage dans le conduit secondaire (36) avec une première réflexion (58.1) sur la bifurcation (38), suivie d'une réflexion (58.2) sur l'une des parois du conduit secondaire (36) et d'une seconde réflexion (58.3) sur la bifurcation (38), puis de multiples réflexions (58.4, 58.5) sur les parois interne (40) et externe (42) avant de sortir du conduit secondaire (36).

5. Nacelle d'aéronef selon la revendication 3, **caractérisée en ce que** les deux parois de la bifurcation (38) sont configurées de manière à piéger l'énergie acoustique par de multiples réflexions entre la bifurcation (38) et l'une des parois interne (40) ou externe (42) du conduit secondaire (36).

6. Aéronef comprenant une nacelle selon l'une quelconque des revendications précédentes.

## Patentansprüche

1. Gondel eines Luftfahrzeugs mit einem Kanal (22, 36), in dem ein Gasstrom fließt, wobei der Kanal (22, 36) durch zwei Wände begrenzt ist, eine innere Wand (40) und eine äußere Wand (42), die im Wesentlichen konzentrisch sind und wenigstens teilweise mit einer Verkleidung bedeckt sind, die darauf abzielt, einen Teil der Schallenergie zu absorbieren, und wobei die Gondel wenigstens eine sich zwischen der inneren und äußeren Wand (40, 42) über wenigstens einen Teil der Länge des Kanals (22, 36) erstreckende Abtrennung (38, 38') oder eine sich in einer radialen Ebene über wenigstens einen Teil des Kanals (36) erstreckende Gabelung (38, 38') aufweist, die zwei Wände (44, 46) umfasst, **dadurch gekennzeichnet, dass** wenigstens eine der beiden Wände (44, 46) der Abtrennung oder der Gabelung (38, 38')in einer querliegenden Ebene der Gondel ein Profil aufweist, das wenigstens einen konvexen Teil und wenigstens einen konkaven Teil aufweist.

2. Gondel eines Luftfahrzeugs nach Anspruch 1, **dadurch gekennzeichnet, dass** wenigstens eine der beiden Wände (44, 46) der Abtrennung oder der Gabelung (38, 38') eine akustische Verkleidung aufweist, die darauf abzielt, einen Teil der Schallenergie zu absorbieren.

3. Gondel eines Luftfahrzeugs nach einem der vorhergehenden Ansprüche, **dadurch gekennzeichnet, dass** die beiden Wände der Abtrennung oder der Gabelung (38, 38') symmetrisch sind.

4. Gondel eines Luftfahrzeugs nach dem vorhergehenden Anspruch, **dadurch gekennzeichnet, dass** die beiden Wände der Gabelung (38) derart eingerichtet sind, dass sich ein Schallstrahl (56) im sekundären Kanal (36) mit einer ersten Reflexion (58.1) an der Gabelung (38) ausbreitet, gefolgt von einer Reflexion (58.2) an einer der Wände des sekundären Kanals (36) und einer zweiten Reflexion 58.3) an der Gabelung (38) und dann von mehrfachen Reflexionen (58.4, 58.5) an der inneren Wand (40) und der äußeren Wand (42), bevor dieser aus dem sekundären Kanal (36) austritt.

5. Gondel eines Luftfahrzeugs nach Anspruch 3, **dadurch gekennzeichnet, dass** die beiden Wände der Gabelung (38) dazu eingerichtet sind, die Schallenergie durch mehrfache Reflexionen zwischen der Gabelung (38) und an einer der Wände, der inneren Wand (40) oder der äußeren Wand (42), des sekundären Kanals (36) einzufangen.

6. Luftfahrzeug mit einer Gondel nach einem der vorhergehenden Ansprüche.

## Claims

1. Aircraft nacelle that comprises a pipe (22, 36) into which a gas stream flows, said pipe (22, 36) is delimited by two approximately concentric inside wall (40) and outside wall (42), covered at least partially by a coating whose purpose is to absorb a portion of the sound energy, said nacelle comprising at least one partition (38, 38') that extends over at least one portion of the length of the pipe (22, 36) between said inside and outside walls (40, 42), or at least one junction (38, 38') that extends in a radial plane over at least a portion of the length of said pipe (36), which comprises two walls (44, 46), **characterized in that** at least one of the two walls (44, 46) of the partition or the junction (38, 38') comprises a profile in a transversal plan which comprises at least one convex portion and at least one concave portion.

2. Aircraft nacelle according to claim 1, wherein at least one of the two walls (44, 46) of the partition or the junction (38, 38') comprises an acoustic coating whose purpose is to absorb a portion of the sound energy.

3. Aircraft nacelle according one of the preceding claims, wherein the two walls of the partition or the junction (38, 38') are symmetrical.

4. Aircraft nacelle according the preceding claim, wherein the two walls of the junction (38) are defined so as an acoustic beam (56) propagates in the secondary pipe (36) with a first reflection (58.1) on the junction, followed by a reflection (58.2) on one of the walls of the secondary pipe (36) and a second reflection (58.3) on the junction, then multiple reflections (58.4, 58.5) on the inside and outside walls (40, 42) before exiting the secondary pipe (36).

5. Aircraft nacelle according to claim 3, wherein the two walls of the junction (38) are defined so as to trap the acoustic energy by multiple reflections between the junction (38) and one of the inside or outside walls (40, 42) of the secondary pipe (36).

6. Aircraft that comprises a nacelle according one of the preceding claims.
